Europäisches Patentamt

European Patent Office

Office européen des brevets

(19)

(11) Numéro de publication : **0 197 860**
**B1**

(12) **FASCICULE DE BREVET EUROPÉEN**

(45) Date de publication du fascicule du brevet :
28.06.89

(51) Int. Cl.⁴ : **G 21 C 17/00**, G 21 C 19/30

(21) Numéro de dépôt : 86400713.3

(22) Date de dépôt : 02.04.86

(54) Dispositif de collectage et de détection d'hydrogène dans le circuit secondaire d'un réacteur nucléaire à neutrons rapides.

(30) Priorité : 03.04.85 FR 8505063

(43) Date de publication de la demande :
15.10.86 Bulletin 86/42

(45) Mention de la délivrance du brevet :
28.06.89 Bulletin 89/26

(84) Etats contractants désignés :
DE GB IT NL

(56) Documents cités :
CH–A– 589 462
FR–A– 2 173 932
FR–A– 2 422 100
US–A– 3 795 087
ATOMNAJA ENERGIJA, vol. 20, no. 6, juin 1966, pages 482-485 ; V.I. SUBBOTIN et al.: "Détection des fuites dans un générateur de vapeur du type sodium-eau"
REVUE GENERALE NUCLEAIRE, no. 4, juillet-août 1984, page 342-348, Argentin-sur-Creuse, FR ; P. LE BAUD: "La surveillance des générateurs de vapeur dans les chaudières à neutrons rapides par la mesure de l'hydrogène dans le sodium intermédiaire"

(73) Titulaire : NOVATOME
La Boursidière R.N. 186
F-92357 Le Plessis Robinson (FR)

(72) Inventeur : Le Baud, Patrice
60 rue Marie Fichet
F-92140 Clamart (FR)

(74) Mandataire : Bressand, Georges et al
c/o CABINET LAVOIX 2 Place d'Estienne d'Orves
F-75441 Paris Cedex 09 (FR)

Jouve, 18, rue St-Denis, 75001 Paris, France

## Description

L'invention concerne un dispositif de collectage et de détection d'hydrogène dans le circuit secondaire d'un réacteur nucléaire à neutrons rapides comportant un générateur de vapeur dans lequel la chaleur est apportée par du sodium liquide.

Les réacteurs nucléaires à neutrons rapides utilisent généralement un métal liquide tel que le sodium, à la fois comme fluide caloporteur pour refroidir le cœur et comme fluide d'échange intermédiaire du circuit secondaire, pour apporter la chaleur prélevée dans le réacteur à l'eau d'alimentation des générateurs de vapeur, pour permettre son échauffement et sa vaporisation. En cas de fuite à travers la paroi d'échange du générateur de vapeur, de l'eau peut venir en contact avec le sodium liquide qui possède une très forte réactivité chimique vis-à-vis de l'eau. Il se produit une réaction entre l'eau et le sodium qui conduit a un dégagement d'hydrogène. Si la fuite est faible, il n'y a pas saturation du sodium par l'hydrogène qui reste sous forme dissoute dans le sodium en circulation à l'intérieur du générateur de vapeur. En revanche, si la fuite est plus importante, la réaction entre le sodium et l'eau conduit à une formation abondante d'hydrogène qui se présente alors sous forme de bulles gazeuses entraînées par le sodium en circulation. Il est extrêmement important de détecter très rapidement les fuites dans les générateurs de vapeur des réacteurs nucléaires à neutrons rapides, pour éviter une évolution pouvant conduire à une détérioration ou à une destruction du générateur de vapeur et du circuit secondaire de sodium liquide.

Les générateurs de vapeur utilisant le sodium liquide comme fluide d'échange comportent donc des dispositifs de détection d'hydrogène, soit par prélèvement de sodium et analyse de ces prélèvements soit par recueil direct du gaz entraîné par le sodium. En particulier, dans le cas de générateurs de vapeur comportant un ou plusieurs niveaux libres, le sodium étant surmonté par un gaz de couverture inerte tel que l'argon dans certaines parties du générateur de vapeur, on peut détecter facilement l'hydrogène dans ce gaz de couverture.

La méthode de détection par prélèvement de sodium et analyse des prélèvements à un temps de réponse relativement long, ce qui ne permet pas toujours d'assurer la détection dans les conditions suffisantes de rapidité.

Dans le cas où on détecte l'hydrogène dans le gaz de couverture du générateur, la dilution de l'hydrogène est très forte en raison du volume important du gaz neutre de couverture surmontant le sodium liquide. La méthode manque donc de sensibilité. De plus, comme la circulation du sodium liquide dans le générateur de vapeur a lieu de haut en bas, les bulles d'hydrogène ont tendance à être entraînées par le sodium, dans la direction opposée à celle du niveau libre du sodium qui est à la partie supérieure du générateur de vapeur.

Le but de l'invention est donc de proposer un dispositif de collectage et de détection d'hydrogène dans le circuit secondaire d'un réacteur nucléaire à neutrons rapides comprenant un générateur de vapeur ayant une canalisation de sortie de sodium à sa partie inférieure comportant successivement, depuis le générateur de vapeur, une portion verticale, une portion coudée et une portion horizontale, ce dispositif permettant de détecter très rapidement après son apparition, une fuite dans le générateur de vapeur se traduisant par un dégagement d'hydrogène dans le sodium du circuit secondaire.

Dans ce but, le dispositif comporte :

un réservoir dont le volume est faible par rapport au volume interne de la canalisation de sortie de sodium, situé directement au-dessus et en communication avec la partie supérieure de l'espace interne de la portion horizontale de la canalisation juste en aval de la portion coudée et renfermant un gaz non réactif vis-à-vis du sodium, sous une pression suffisante pour créer un interface permanent entre le gaz et le sodium dans le réservoir,

un moyen de piégeage interposé sur la circulation du sodium liquide, à l'intérieur de la canalisation au voisinage de la zone de jonction entre la canalisation et le réservoir, pour perturber l'écoulement du sodium liquide au niveau de cette zone de jonction et favoriser la propagation de l'hydrogène non dissous, sous forme de bulles, vers le réservoir.

et un moyen, connu en soi, de détection d'hydrogène fixé sur le réservoir et ayant une partie en communication avec le gaz inerte contenu dans le réservoir dans lequel se rassemble l'hydrogène formé en cas de fuite dans le générateur de vapeur et se trouvant sous forme non dissoute dans le sodium.

Afin de bien faire comprendre l'invention on va maintenant décrire, à titre d'exemples non limitatifs, en se référant aux figures jointes en annexe, plusieurs modes de réalisation d'un dispositif selon l'invention.

Dans ces figures :

la Fig. 1 est une vue schématique partielle, en perspectives, du circuit secondaire du générateur de vapeur :

la Fig. 2 est une vue en coupe par un plan vertical d'un dispositif de collectage et de détection d'hydrogène non dissous dans le circuit de sodium secondaire du générateur de vapeur ;

la Fig. 2a est une vue suivant A de la Fig. 2 ;

la Fig. 3 est une vue en coupe par un plan vertical d'une variante de réalisation du dispositif de collectage et de détection d'hydrogène ;

la Fig. 3a est une vue en coupe suivant AA de la Fig. 3 ;

la Fig. 4 est une vue en coupe par un plan vertical d'un dispositif de collectage et de détection d'hydrogène non dissous dans le circuit de sodium du générateur de vapeur, selon une seconde variante de réalisation.

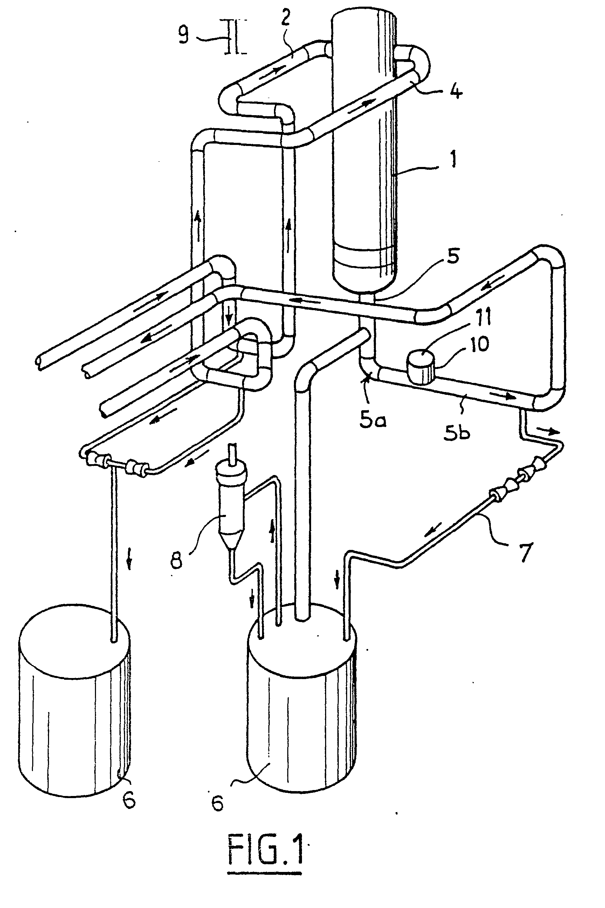

Sur la Fig. 1, on voit un générateur de vapeur 1 d'un réacteur nucléaire à neutrons rapides, dans l'enveloppe duquel pénètre, à sa partie supérieure, du sodium liquide chaud par des tuyauteries 2 et 4. Les tuyauteries 2 et 4 sont reliées aux sorties de sodium secondaire de deux échangeurs de chaleur intermédiaires plongeant dans la cuve du réacteur nucléaire. Le sodium primaire remplissant la cuve et venant en contact avec les assemblages combustibles du cœur du réacteur échauffe le sodium secondaire à l'intérieur des échangeurs de chaleur intermédiaires. Le sodium secondaire chaud mis en circulation par une pompe pénètre dans le générateur de vapeur 1 puis s'écoule dans ce générateur de vapeur de haut en bas, en contact avec un faisceau de tubes dans lesquels circule l'eau d'alimentation qui est ainsi échauffée puis vaporisée. Le sodium secondaire est lui-même refroidi et ressort du générateur de vapeur 1 par une tuyauterie 5 placée à la partie inférieure et au centre du générateur de vapeur. La tuyauterie 5 est elle-même reliée à la pompe de circulation du sodium secondaire qui renvoie le sodium refroidi dans la partie d'entrée des échangeurs de chaleur intermédiaires.

On voit également sur la Fig. 1 deux réservoirs de stockage 6 du sodium liquide secondaire dont l'un est relié par des canalisations comportant des vannes de fermeture aux tuyauteries 2 et 4 et dont l'autre est relié à la tuyauterie 5, en particulier par une conduite 7 de vidange rapide du sodium. Un dispositif 8 de séparation de l'hydrogène contenu dans le sodium est associé à ce réservoir 6. L'hydrogène séparé par le dispositif 8 est évacué par une cheminée 9.

A l'intérieur du générateur de vapeur 1, le sodium est séparé de l'eau d'alimentation par la paroi des tubes du faisceau. Ces tubes sont obtenus par des opérations d'élaboration extrêmement soignées accompagnées de contrôles sévères. Cependant, il peut arriver que certains des tubes présentent de très petites fissures ou des amorces de fissure. Les contraintes thermiques ou mécaniques subies par ces tubes en service de même que la corrosion peuvent également mettre en cause l'intégrité de leur paroi. La pression de l'eau ou de la vapeur dans les tubes étant plus forte que la pression du sodium, l'apparition d'une fissure se traduit par une introduction d'eau ou de vapeur dans le sodium et donc par une production d'une certaine quantité d'hydrogène. Très rapidement, cet hydrogène se trouve sous forme de bulles transportées par le sodium dans le générateur de vapeur puis dans la canalisation 5 reliée à sa partie inférieure de sortie. Il importe alors de détecter très rapidement l'apparition de la fuite se traduisant par la présence d'hydrogène dans le sodium, pour éviter que des quantités importantes d'eau ou de vapeur ne passent dans le sodium et soient la cause d'une réaction très vive et de grande ampleur pouvant s'accompagner de destructions locales ou partielles des composants du circuit de sodium secondaire. Lorsqu'une fuite est détectée on peut rapidement isoler le générateur de vapeur et vidanger le sodium qu'il contient grâce à la conduite de vidange rapide 7 et au réservoir de stockage 6 correspondant. L'hydrogène contenu dans le sodium est ensuite séparé par le dispositif 8 et la cheminée 9. Le tube défectueux du faisceau du générateur de vapeur peut être soit isolé soit réparé.

Pour effectuer une détection rapide et efficace de l'hydrogène, on place un dispositif 10 de collectage et de détection d'hydrogène suivant l'invention, sur une partie horizontale 5b de la canalisation 5 située juste en aval du coude 5a suivant la partie verticale de sortie du sodium en dessous de l'enveloppe du générateur de vapeur.

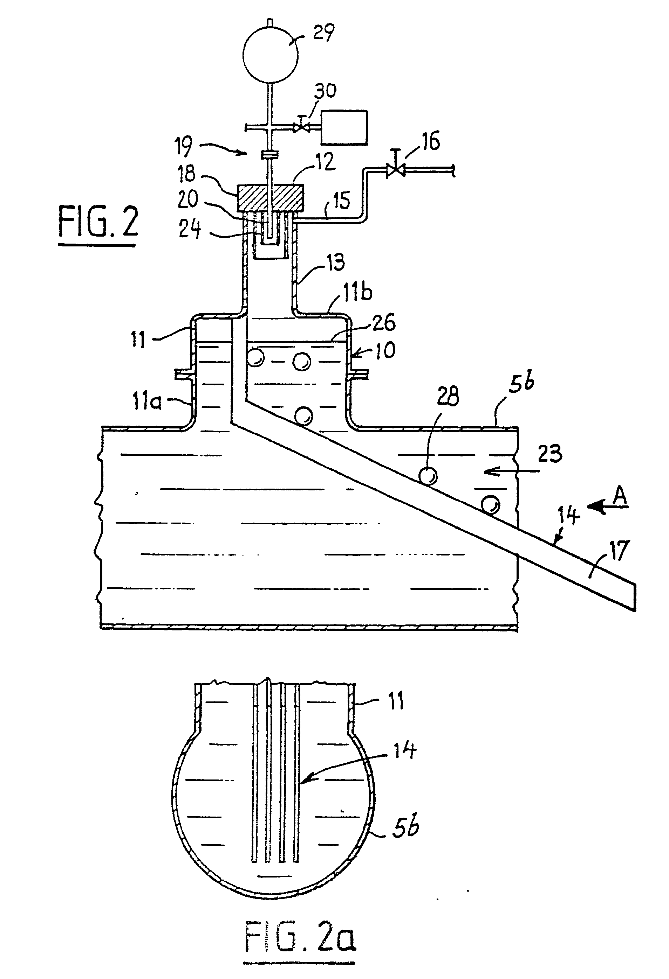

En se reportant à la Fig. 2, on voit le dispositif de collectage et de détection désigné de façon générale par le repère 10 qui comporte un réservoir cylindrique 11 à axe vertical, un ensemble de détection et de balayage 12 et un dispositif de piégeage de l'hydrogène 14. Le réservoir 11, situé directement au-dessus de la partie 5b de la canalisation 5, est en communication directe avec le volume intérieur de cette partie 5b ; ce réservoir est constitué par une enveloppe métallique 11b soudée sur un piquage 11a prévu sur la canalisation 5b. Le volume du réservoir 11 est extrêmement faible par rapport au volume du circuit secondaire ou par rapport au volume intérieur du générateur de vapeur 1. C'est ainsi que pour un circuit secondaire renfermant plusieurs centaines de mètres cubes de sodium, et pour une canalisation secondaire 5 dont le diamètre est voisin de 1 mètre, on utilisera un détecteur 10 dont le volume intérieur du réservoir 11 est de l'ordre de $5 \cdot 10^{-3}$ m³.

La partie du réservoir 11 opposée à sa section d'entrée en communication avec la canalisation 5 est prolongée par une partie tubulaire 13 qui porte l'ensemble du dispositif de mesure et de balayage de l'hydrogène. Une conduite 15 reliée à un réservoir d'argon non représenté, avec interposition d'une vanne 16, est reliée à la partie supérieure du tube 13 qui est fermée par un bouchon 18 traversé par un tube de prélèvement 20 constituant la partie inférieure du détecteur d'hydrogène 19.

Le dispositif de piégeage d'hydrogène 14 est constitué par un ensemble de lames parallèles 17 dont le profil est visible sur la Fig. 2. Ces lames sont fixées sur le réservoir 11 à leur partie supérieure et comportent une partie inclinée s'étendant dans le volume intérieur de la canalisation 5, en partie au niveau du réservoir 11 et en partie en amont de ce réservoir si l'on considère la circulation du métal liquide dans la canalisation 5 (flèche 23). Les lames sont disposées côte à côte avec un espacement inférieur au diamètre moyen des bulles, de façon à constituer une grille interposée sur la circulation du sodium liquide dans la canalisation 5, comme il est visible sur les Fig. 2 et 2a.

Pour la mise en service du dispositif de collectage et de détection 10, on introduit dans le tube 13 et le réservoir 11, grâce à la canalisation 15 dont la vanne 16 est ouverte, une certaine quantité d'argon. Le tube 20 du détecteur d'hydrogène est constitué par exemple par une membrane de faible épaisseur à travers laquelle l'argon ne peut diffuser. Lors du remplissage du circuit secondaire en sodium et pendant la circulation de ce sodium dans la canalisation 5 suivant le sens 23, il s'établit à l'intérieur du réservoir 11, un interface 26 entre l'argon et le sodium liquide, l'argon s'étant mis en pression de façon à équilibrer la pression du sodium. La partie 20 du détecteur d'hydrogène mettant en communication ce détecteur 19 avec le volume intérieur du réservoir 11 est à l'intérieur de l'argon de couverture au-dessus du niveau 26, la quantité et la pression d'argon étant suffisantes pour maintenir le niveau 26 toujours en dessous du tube 20.

Lorsque le sodium en circulation dans la canalisation 5 renferme des bulles d'hydrogène 28 à la suite d'une introduction d'eau ou de vapeur dans le sodium liquide à l'intérieur du générateur de vapeur, ces bulles 28 sont arrêtées par le dispositif de piégeage 14 en forme de grille, l'espacement des lames 17 de la grille étant suffisamment faible pour que la majeure partie des bulles d'hydrogène en circulation avec le sodium liquide soit arrêtée par la grille. Cette grille assure également, comme il est visible sur la Fig. 2, le guidage des bulles d'hydrogène 28 jusqu'au niveau libre 26 où ces bulles viennent se diluer dans l'argon de couverture.

La face de la membrane 20 est en communication avec un ensemble de pompage et de mesure 29 dans lequel est créé un vide poussé. L'ensemble 29 et la seconde face de la membrane 20 peuvent être reliés à un système de prévidage du circuit par ouverture d'une vanne 30.

L'hydrogène contenu dans l'argon de couverture dans lequel plonge le tube 20 diffuse à travers la membrane 20 puis est dirigé vers l'ensemble de pompage et de mesure 29 sous très faible pression à l'intérieur duquel on détecte l'hydrogène soit par l'information donnée par le dispositif de pompage qui peut être une pompe ionique soit par spectrométrie de masse.

Des baffles thermiques 24 permettent de maintenir la membrane 20 à température constante.

La méthode de détection est extrêmement rapide et sensible, puisque l'hydrogène est entraîné par le sodium liquide circulant à grande vitesse pour être capté par le dispositif de collectage et de détection 10 de faible volume et situé à une faible distance de la sortie du générateur de vapeur.

De plus, le dispositif 10 est placé en aval du coude 5a au niveau duquel l'hydrogène se rassemble, comme résultat de l'effet centrifuge dans le courant de sodium, à la partie supérieure de la canalisation 5. les bulles d'hydrogène 28 sont ainsi plus rapidement captées et transmises à la partie supérieure du réservoir 11 dans laquelle la teneur en hydrogène du faible volume d'argon passe très rapidement à des valeurs relativement élevées même dans le cas d'une faible fuite d'eau ou de vapeur dans le générateur de vapeur 1. On peut ainsi isoler le générateur de vapeur très rapidement après l'apparition d'une fuite, avant que la fissure à l'origine de la fuite n'ait eu le temps de s'élargir et avant qu'une quantité notable d'eau ou de vapeur soit introduite dans le sodium secondaire.

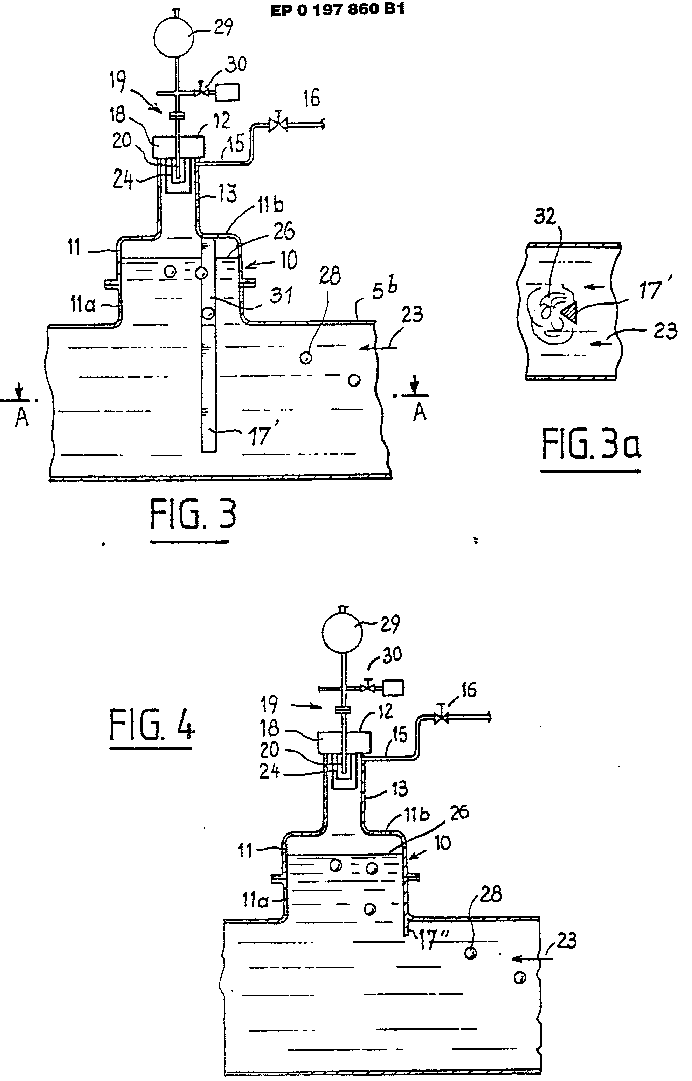

Sur les Fig. 3 et 3a, on voit une variante de réalisation du dispositif 10, les parties identiques des dispositifs représentés sur les Fig. 2 et 3 portant les mêmes repères. Le dispositif 10 selon la variante représentée aux Fig. 3 et 3a ne diffère du dispositif précédent que par la réalisation du moyen de piégeage des bulles d'hydrogène au niveau du réservoir 11. Ce dispositif de piégeage est constitué par une barre profilée à section triangulaire 17' visible sur la Fig. 3a fixée à la partie inférieure et dans le prolongement d'un tube de support 31 fixé à sa partie supérieure au réservoir 11.

La section droite triangulaire de la barre 17' à sa base dirigée vers l'écoulement de sodium liquide incident (flèche 23). Cette barre profilée crée dans l'écoulement de sodium liquide secondaire 23 un tourbillon 32 immédiatement en aval de la barre 17'. Ce tourbillon 32 permet une séparation des bulles d'hydrogène qui remontent par l'effet du tourbillon et de la différence de densité dans le réservoir 11 où elles viennent se diluer dans l'argon de couverture. La détection est effectuée comme précédemment.

Enfin, sur la Fig. 4, on voit que le dispositif 14 de piégeage des bulles est constitué par un becquet 17" soudé sur la paroi interne de la canalisation 5, à sa partie supérieure, immédiatement en amont du réservoir 11. On crée ainsi un tourbillon dans la partie du flux de sodium liquide renfermant la plus forte proportion de bulles d'hydrogène, ce qui permet une séparation des bulles d'hydrogène et leur récupération dans l'argon de couverture du réservoir 11.

On voit que le dispositif suivant l'invention permet une détection très rapide, très efficace et avec une très grande sensibilité de l'hydrogène formé par réaction chimique dans un liquide tel que le sodium. De plus, le dispositif de collectage et de détection suivant l'invention est d'une très grande simplicité et peut être facilement monté sur un circuit de sodium liquide sans modification importante de ce circuit.

L'invention ne se limite pas aux modes de réalisation qui ont été décrits.

C'est ainsi que le dispositif de piégeage d'hydrogène peut être réalisé par tout autre dispositif introduisant une perturbation dans l'écoulement de métal liquide au niveau du réservoir, de façon à séparer l'hydrogène, sans toutefois introduire une perte de charge notable dans cet écoulement.

Dans le cas où l'écoulement est perturbé par une barre profilée placée à la verticale du réservoir, cette barre peut avoir non seulement une section triangulaire mais encore une section rectangulaire. Ce profil peut être réalisé aussi bien sous forme pleine que sous forme tubulaire. On peut utiliser plusieurs barres verticales placées côte à côte dans l'écoulement de liquide.

Une partie en saillie à l'intérieur de la canalisation, telle que le becquet 17″ représenté sur la Fig. 4, peut être réalisée par tout procédé et selon toute forme permettant une perturbation voulue de l'écoulement dans sa partie supérieure où la proportion de bulles d'hydrogène est forte.

Le volume du réservoir du dispositif de collectage et de détection doit être faible par rapport au volume du circuit ou du récipient dans lequel circule le liquide réactif, ce volume permettant en particulier l'obtention d'une très bonne sensibilité de détection. Dans le cas d'un circuit secondaire de sodium d'un réacteur nucléaire à neutrons rapides de type actuellement exploité, ce volume peut être avantageusement compris entre $10^{-3}$ et $10^{-2}$ m$^3$.

Le détecteur d'hydrogène lui-même peut être de tout type connu, à partir du moment où ce dispositif peut être mis en communication par une de ses parties avec la couverture d'argon située dans la partie supérieure du réservoir.

## Revendications

1. Dispositif de collectage et de détection d'hydrogène dans le circuit secondaire d'un réacteur nucléaire à neutrons rapides comprenant un générateur de vapeur (1) ayant une canalisation de sortie de sodium (5) à sa partie inférieure comportant successivement, depuis le générateur de vapeur, une portion verticale, une portion coudée (5a) et une portion horizontale (5b) caractérisé par le fait qu'il comporte :

— un réservoir (11) dont le volume est faible par rapport au volume interne de la canalisation de sortie de sodium (5), situé directement au-dessus et en communication avec la partie supérieure de l'espace interne de la portion horizontale (5b) de la canalisation (5) juste en aval de la portion coudée (5a) et renfermant un gaz non réactif vis-à-vis du sodium, sous une pression suffisante pour créer un interface permanent (26) entre le gaz et le sodium dans le réservoir (11),

— un moyen de piégeage (14, 14′) interposé sur la circulation du sodium liquide, à l'intérieur de la canalisation (5) au voisinage de la zone de jonction entre la canalisation (5) et le réservoir (11), pour perturber l'écoulement du sodium liquide au niveau de cette zone de jonction et favoriser la propagation de l'hydrogène non dissous, sous forme de bulles, vers le réservoir (11), ainsi qu'un moyen (19), connu en soi, de détection d'hydrogène fixé sur le réservoir (11) et ayant une partie (20) en communication avec le gaz inerte contenu dans le réservoir (11) dans lequel se rassemble l'hydrogène formé en cas de fuite dans le générateur de vapeur et se trouvant sous forme non dissoute dans le sodium.

2. Dispositif de collectage et de détection suivant la revendication 1 caractérisé par le fait que le moyen de piégeage (14) interposé sur la circulation du liquide est constitué par un ensemble de lames (17) fixées à l'une de leurs extrémités sur le réservoir (11) et s'étendant parallèlement les unes aux autres à l'intérieur de la canalisation (5), pour constituer une grille interposée sur la circulation du liquide dans la canalisation (5), ayant un faible espacement entre deux lames (17) consécutives pour le passage du liquide inférieur au diamètre moyen des bulles.

3. Dispositif de collectage et de détection d'hydrogène suivant la revendication 1 caractérisé par le fait que le moyen de piégeage est constitué par au moins une barre (17′) dont la section droite dans un plan passant par la direction de circulation du liquide présente un côté sensiblement perpendiculaire à la direction (23) de circulation du liquide.

4. Dispositif de collectage et de détection d'hydrogène suivant la revendication 3 caractérisé par le fait que la section droite de la barre profilée (17′) est un triangle dont une des bases est dirigée vers l'écoulement (23) du liquide.

5. Dispositif de collectage et de détection d'hydrogène suivant la revendication 1 caractérisé par le fait que le dispositif de piégeage est constitué par une partie (17″) en saillie par rapport à la paroi interne de la canalisation (5) disposée immédiatement en amont de la zone de jonction du réservoir (11) avec la canalisation (5), lorsqu'on considère le sens de circulation (23) du liquide dans l'enveloppe (5).

6. Dispositif de collectage et de détection d'hydrogène suivant la revendication 1, caractérisé par le fait que le volume du réservoir (11) est compris entre $10^{-3}$ et $10^{-2}$ m$^3$.

## Claims

1. Apparatus for collecting and detecting hydrogen in the secondary circuit of a rapid neutron nuclear reactor comprising a steam generator (1) having a sodium outlet channel (5) at its lower end comprising successively, from the steam generator, a vertical portion, an elbow portion (5a) and a horizontal portion (5b), characterised in that it comprises :

— a reservoir (11) the volume of which is small relative to the internal volume of the sodium outlet channel (5), located directly above and communicating with the upper part of the inner space of the horizontal portion (5b) of the channel (5) just downstream of the elbow portion (5a) and containing a gas which does not react with sodium, under sufficient pressure to create a permanent interface (26) between the gas and the sodium in the reservoir (11),

— trapping means (14, 14′) interposed on the liquid sodium circuit, inside the channel (5) in the vicinity of the junction zone between the channel (5) and the reservoir (11), for disrupting the outflow of liquid sodium at this junction zone and promoting the propagation of undissolved hydrogen in the form of bubbles towards the reservoir (11), as well as means (19), known per se, for detecting hydrogen fixed on the reservoir (11) and having a part (20) communicating with the inert gas contained in the reservoir (11) in which the hydrogen formed in the event of a leakage in the steam generator is collected, this hydrogen being in undissolved form in the sodium.

2. Apparatus for collection and detection as claimed in claim 1, characterised in that the trapping means (14) interposed on the liquid circuit consists of a set of fins (17) fixed to the reservoir (11) at one end and extending parallel to one another inside the channel (5), to form a grid inserted in the liquid circuit inside the channel (5), having a small spacing between two consecutive fins (17) for the passage of the liquid, this spacing being less than the average diameter of the bubbles.

3. Apparatus for collecting and detecting hydrogen as claimed in claim 1, characterised in that the trapping means consists of at least one bar (17') the cross-section of which, in a plane passing through the direction of circulation of the liquid, has a side which is substantially perpendicular to the direction (23) of circulating of the liquid.

4. Apparatus for collecting and detecting hydrogen as claimed in claim 3, characterised in that the cross-section of the profiled bar (17') is a triangle, one side of which is directed towards the outflow (23) of liquid.

5. Apparatus for collecting and detecting hydrogen as claimed in claim 1, characterised in that the trapping device consists of a portion (17") projecting relative to the inner wall of the channel (5) located immediately upstream of the junction zone of the reservoir (11) with the channel (5), viewed in the direction of circulation (23) of the liquid in the casing (5).

6. Apparatus for collecting and detecting hydrogen as claimed in claim 1, characterised in that the volume of the reservoir (11) is between $10^{-3}$ and $10^{-2}$ m³.

**Patentansprüche**

1. Vorrichtung zum Sammeln und Feststellen von Wasserstoff im sekundären Kreislauf eines schnellen Neutronen-Kernreaktors, mit einem Dampfgenerator (1), der eine Natrium-Ausgangsleitung (5) an seinem unteren Bereich aufweist, und von dem Dampfgenerator ausgehend, aufeinanderfolgend einen vertikalen Abschnitt, einen gekrümmten Abschnitt (5a) und einen horizontalen Abschnitt (5b) aufweist, dadurch gekennzeichnet, daß sie aufweist:
— ein Reservoir (11) dessen Volumen bezüglich des Innenvolumens der Natrium-Ausgangsleitung (5) klein ist, welches direkt über dem oberen Bereich des Innenraumes des horizontalen Abschnitts (5b) der Leitung (5) unmittelbar stromab des gekrümmten Abschnitts (5a) angeordnet ist und mit dem oberen Bereich in Verbindung steht, und ein gegenüber Natrium nicht reaktives Gas unter einem ausreichenden Druck einschließt, um eine permanente Verbindungs- oder Zwischenfläche (26) zwischen dem Gas und dem Natrium in dem Reservoir (11) zu bilden,
— eine Auffangeinrichtung (14, 14') welche in die Zirkulation des flüssigen Natriums im Inneren der Leitung (5) in der Nähe der Verbindungszone zwischen der Leitung (5) und dem Reservoir (11) angeordnet ist, um den Fluß des flüssigen Natriums auf der Höhe dieser Verbindungszone durcheinander zu wirbeln, und den Vortrieb des nicht gelösten Wasserstoffs, in Form von Blasen, zu dem Reservoir (11) zu unterstützen, sowie eine an sich bekannte Wasserstoffeststellungseinrichtung (19), welche auf dem Reservoir (11) befestigt ist und einen Bereich (20) in Verbindung mit dem in dem Reservoir (11) enthaltenen inerten Gas hat, in dem sich der im Falle eines Lecks in dem Dampfgenerator gebildete Wasserstoff sammelt und sich in nicht gelöstem Zustand in dem Natrium befindet.

2. Vorrichtung zum Sammeln und Feststellen von Wasserstoff nach Anspruch 1, dadurch gekennzeichnet, daß die in die Zirkulation der Flüssigkeit eingebrachte Auffangeinrichtung (14) aus einer Lamellenanordnung (17) gebildet ist, die an einem ihrer Enden an dem Reservoir (11) befestigt sind und sich parallel zueinander im Inneren der Leitung (5) erstrecken, um ein in die Zirkulation der Flüssigkeit in der Leitung (5) eingesetztes Sieb zu bilden, das einen geringen Abstand zwischen zwei aufeinanderfolgende Lamellen (17) für das Vorwärtsströmen der Flüssigkeit aufweist, der geringer ist als der mittlere Durchmesser der Blasen.

3. Vorrichtung zum Sammeln und Feststellen von Wasserstoff nach Anspruch 1, dadurch gekennzeichnet, daß die Auffangeinrichtung aus wenigstens einem Stab oder einer Barre (17') gebildet ist, deren Querschnitt in einer Ebene durch die die Zirkulationsrichtung der Flüssigkeit ghet, eine Seite aufweist, die im wesentlichen senkrecht zur Zirkulationsrichtung (23) der Flüssigkeit verläuft.

4. Vorrichtung zum Sammeln und Feststellen von Wasserstoff nach Anspruch 3, dadurch gekennzeichnet, daß der Querschnitt der profilierten Barre (17') ein Dreieck ist, dessen eine der Basen auf die Stromrichtung (23) der Flüssigkeit gerichtet ist.

5. Vorrichtung zum Sammeln und Feststellen von Wasserstoff nach Anspruch 1, dadurch gekennzeichnet, daß die Auffangvorrichtung aus einem Vorsprungbereich (17") bezüglich der inneren Seitenwand der Leitung (5) gebildet ist, der unmittelbar stromauf der Verbindungszone des Reservoirs (11) mit der Leitung (5) angeordnet ist, unter Beachtung der Zirkulationsrichtung (23) der Flüssigkeit in der Umhüllung (5).

6. Vorrichtung zum Sammeln und Feststellen von Wasserstoff nach Anspruch 1, dadurch gekennzeichnet, daß das Volumen des Reservoirs (11) zwischen $10^{-3}$ und $10^{-2}$ m³ liegt.

FIG.1

FIG.2

FIG.2a

FIG. 3

FIG. 3a

FIG. 4